# EUROPEAN PATENT SPECIFICATION

(11) **EP 0 551 310 B1**
(45) Date of publication and mention of the grant of the patent: **24.04.1996**
(21) Application number: 91916715.5
(22) Date of filing: 09.09.1991
(51) Int. Cl.: H04Q 7/38, G01S 5/14

(54) **METHOD OF LOCATION IN A MOBILE RADIO SYSTEM**
STANDORTERMITTLUNGSVERFAHREN IN EINEM MOBILFUNKSYSTEM
PROCEDE DE LOCALISATION POUR SYSTEME DE RADIOTELEPHONES MOBILES

(30) Priority: 13.09.1990 SE 9002920
(43) Date of publication of application: 21.07.1993
(73) Proprietor: TELIA AB, S-123 86 Farsta (SE)
(72) Inventor: WICKMAN, Johan, S-205 77 Malmö (SE); HAKANSSON, Agne, S-214 51 Malmö (SE)
(74) Representative: Karlsson, Berne
(86) International application number: SE9100590
(87) International publication number: WO9205672

(56) References cited:
- EP-A- 0 072 984
- EP-A- 0 210 396
- EP-A- 0 341 738
- US-A- 4 670 905
- US-A- 4 740 792

## Description

### FIELD OF THE INVENTION

The present invention relates to a method of location in mobile radio systems. The invention relies especially on an existing network for mobile telephony, CEPT GSM (Groupe Speciale Mobile). The specifications of GSM relate to a Pan-European network for mobile telephony and data communication functions. The invention utilizes existing system components in a network, base stations, mobile stations as well as the signaling system in a new way to provide a new function, the location. The invention is based on absolute measurement of distance between the unknown position, the position of the mobile station, and three fixed reference points, base stations.

### THE STATE OF THE ART

Location has been a well-established concept for a long time. Various mathematical methods are known, for instance the circle and hyperbola methods, which are used for location. This has also occured previously in radio systems, see for instance European patent application 0 320 913.

However, the previously proposed methods involve modifications of the existing specifications of the radio systems. The present invention in contrast utilizes only a sequence of already existing functions, especially in the GSM system. According to the present invention, for instance no synchronization of the base stations is required, which is necessary with the previously known technique.

### SUMMARY OF THE INVENTION

Thus, the present invention provides a method of location in mobile radio systems comprising mobile stations and base stations. According to the invention, every mobile station listens continously on channels from surrounding base stations of which at least three are selected. The mobile station calls a selected base station which calculates their distances to the mobile station. The calculated distance information and identity information of the mobile station and the selected base stations are transmitted to a location unit determining the location of the mobile unit.

Further embodiments of the invention are set forth in the accompanying claims.

### BRIEF DESCRIPTION OF THE DRAWINGS

The invention will now be described with reference to the accompanying drawings in which
figure 1 is a diagram depicting the mathematical method used,
figure 2 illustrates schematically the structure of the mobile radio system,
figure 3A is a flow chart of the method according to the invention,
figure 3B is a continuation of the flow chart of figure 3A according a first embodiment of the invention,
figure 4 is a continuation of the flow chart of figure 3A in accordance with a second embodiment of the invention, and
figure 5 is a flow chart for establishing a list of the base stations and forms part of the present invention.

### DETAILED DESCRIPTION OF PREFERRED EMBODIMENTS

Before the invention is described in detail it is convenient to define certain terms common in this field. Positioning means that a mobile object has the ability of determining its own position, with or without participation by the environment. Location means that the environment has the ability of determining the position of the mobile object, with or without participation by the object observed. Navigation means that positioning and location are used as tools for moving from a start point to an end point. The present invention primarily relates to location, that is the environment's control of the position of the mobile objects, in this case mobile stations in a mobile telephone network. The present invention also falls within the group of systems wherein angles and/or distances are measured relative to fixed points. In such systems various geometrical methods are used. One such method is the so called circle method.

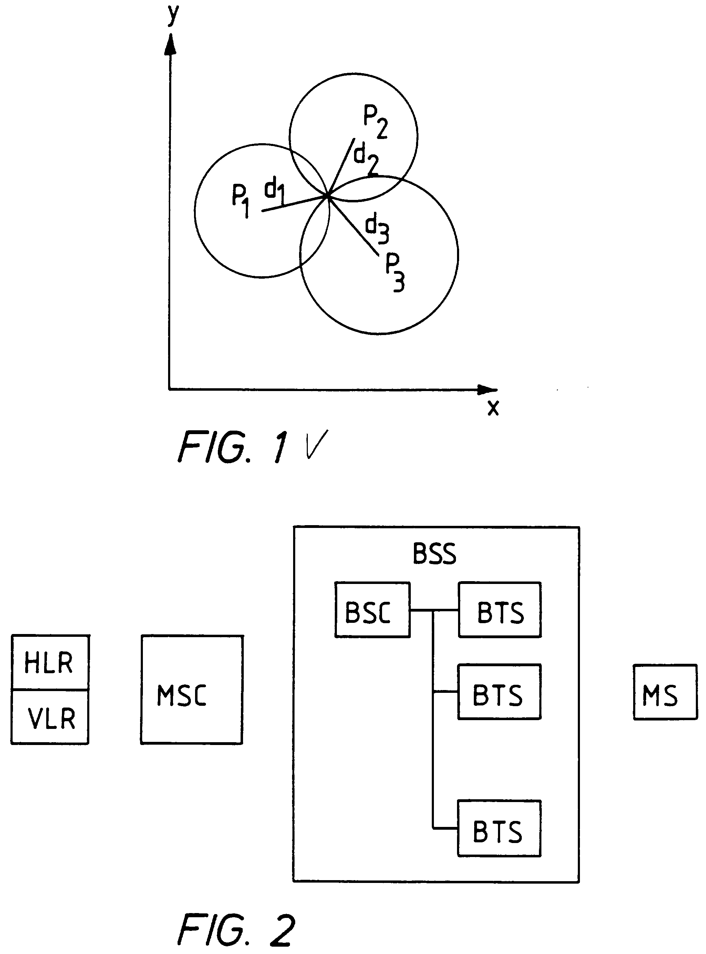

In figure 1 the geometrical conditions of the circle method are illustrated. It is based on measurement of three independent distances, d₁,d₂,d₃. With three given reference points p₁,p₂,p₃ in a plane it is possible to establish the coordinates of any other point in the same plane using the distances between the reference points and the point in question.

If the reference points have the coordinates pₙ = (aₙ, bₙ), n = 1, 2, 3 the unknown point (x₀, y₀) is obtained from the following equation system.

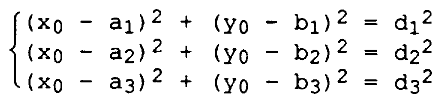

Also other mathematical methods may be used with the present invention, for instance the hyperbola method.

A description of the GSM system may be obtained from GSM Recommendations 03, 04 and 05. Below is only a brief summary of the units used in the present invention. CEPT GSM (Groupe Speciale Mobile) was established in 1982 to formulate specifications for the Pan-European mobile radio system.

The functional architecture is shown in figure 2. The system comprises a base station system BSS with a base station controller BSC and base transceiver stations BTS. The system also comprises mobile stations MS, a mobile services switching centre MSC with a home location register HLR and a visitor location register VLR.

Two interfaces are mandatory at present, namely the radio interface and the interface between the mobile switching centre and the base station system. The radio interface is defined according to the layered model and the physical layer comprises a time division multiple access (TDMA) structure having eight time slots per radio carrier. The TDMA structure is used by channels, logical channels, in higher layers. The logical channels are divided into traffic channels and control channels.

When the mobile station, most often a vehicle, is moving it happens that it enters a new base station area. The mobile station must detect this change of area to provide the home location register with its correct staying area. This means that the mobile station continuously has to scan all the broadcast control channels BCCH of the base stations. It measures the received signal strengths and ranges the strongest stations at the moment in a table. This function is very useful since the mobile stations when locating need to know which three base stations are the best to use.

The GSM system contains a function called adaptive frame alignment AFA. Eight time slots forms a TDMA frame. The TDMA frames of all the frequence channels should be aligned with each other. In the base station the TDMA frame is delayed in the up link with a fixed period of three time slots from the start of the TDMA frame on the down link. In the mobile station the delay in the propagation of the signal is adjusted for. The delay is called timing advance TA. It is the process of adjusting for this delay which is called adaptive frame alignment AFA.

The timing advance TA is measured by a base station each time it detects a transmission on the random access channel RACH. The timing advance TA is defined as the delay of the RACH signal relative to an expected signal from a mobile station on the distance zero. The measured value is rounded to the closest bit period and is signaled to the mobile station. The value of the timing advance TA may be interpreted as a measure of the distance to the base station. The uncertainty is calculated to be approximately 277 metres.

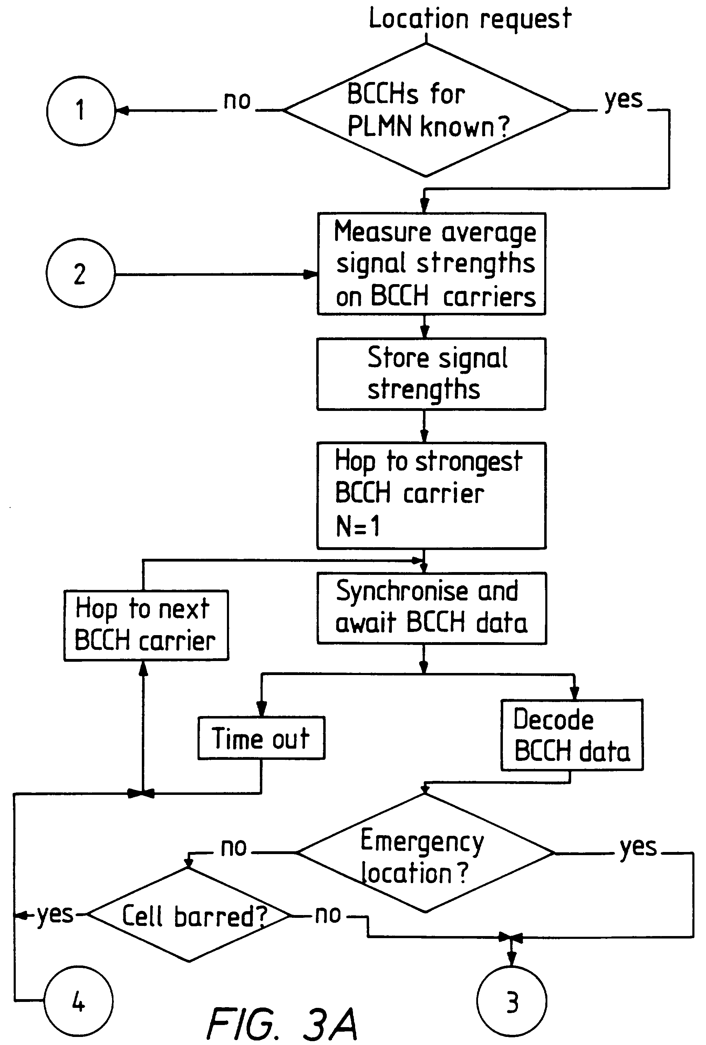

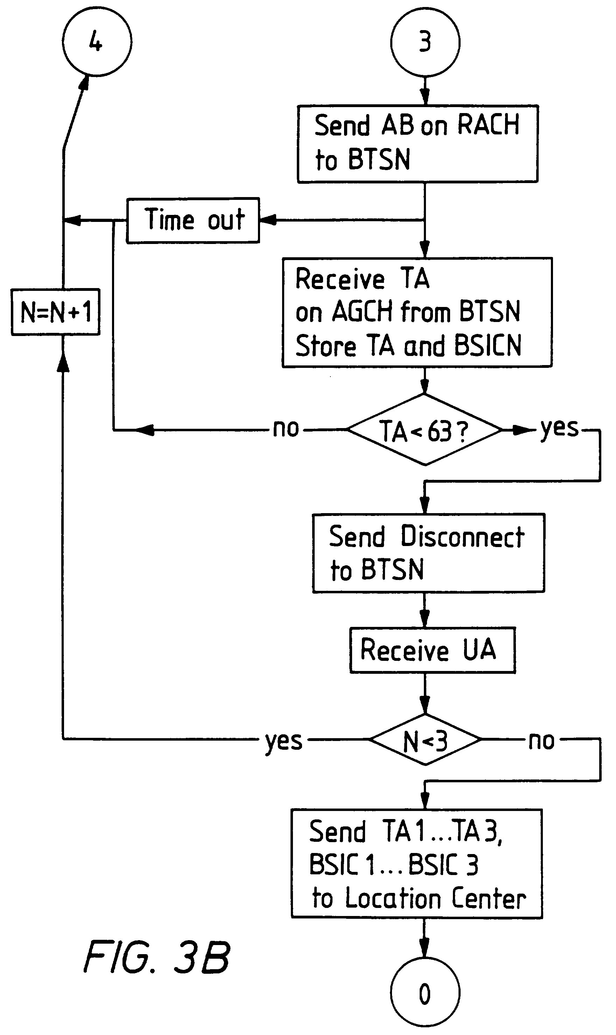

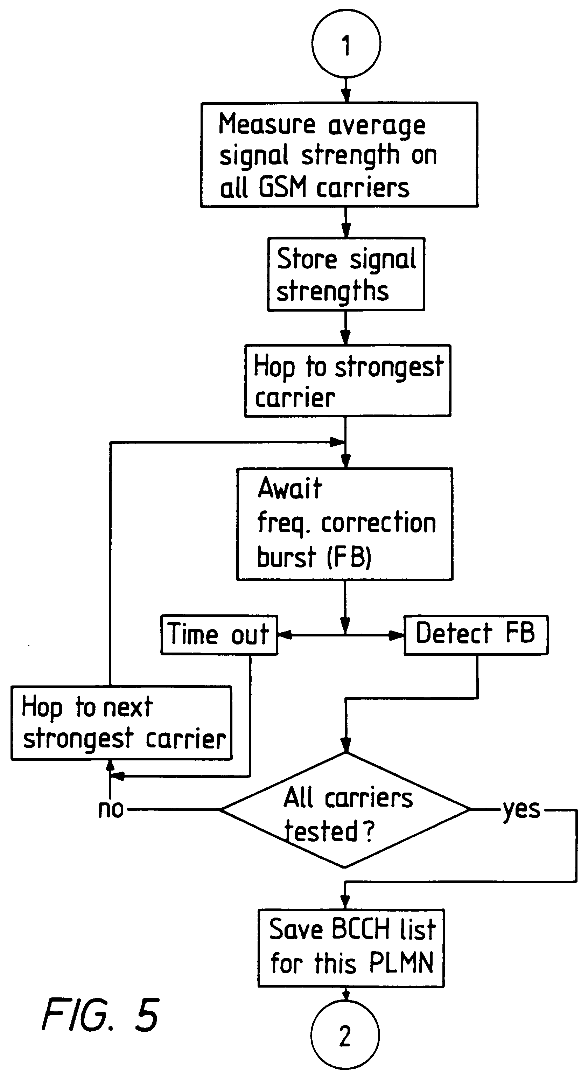

According to the present invention the AFA function is used for measurement of distance for location of mobile units in a mobile telephone system. The method benefits from the fact that the mobiles continuously listen to the control channels of the surrounding base stations and hold the results in a table arranged according to the signal strength. There is no need to synchronize the base stations in this method. The method is described with reference to the flow chart of figures 3A and 3B. The method is initiated by a location request. How this request is initiated does not form part of the present invention. In the first condition box it is determined if the control channels BCCH are known for the base stations in the public land mobile network PLMN. If not, these are determined according to the flow chart of figure 5 described below. Thereafter the mobile station measures the signal strengths on the control channels BCCH, selects the three best and stores their frequencies and identities. If the cell is barred location is permitted only if it is an emergency location, which, thus, is placed in the same category as emergency calls. In GSM it is permitted to make emergency calls via a barred cell.

The flow chart is continued in figure 3B wherein the mobile unit transmits access bursts AB to the three selected base stations BTS number N on the random access channel RACH. The base station detects the access burst, calculates the timing advance and signals to the mobile station. The mobile station receives three TA values on an access grant channel AGCH and transmits these together with the respective base station identity codes BSIC and its own identity to a location centre or a location unit. The accuracy of this method is calculated to be 560 metres.

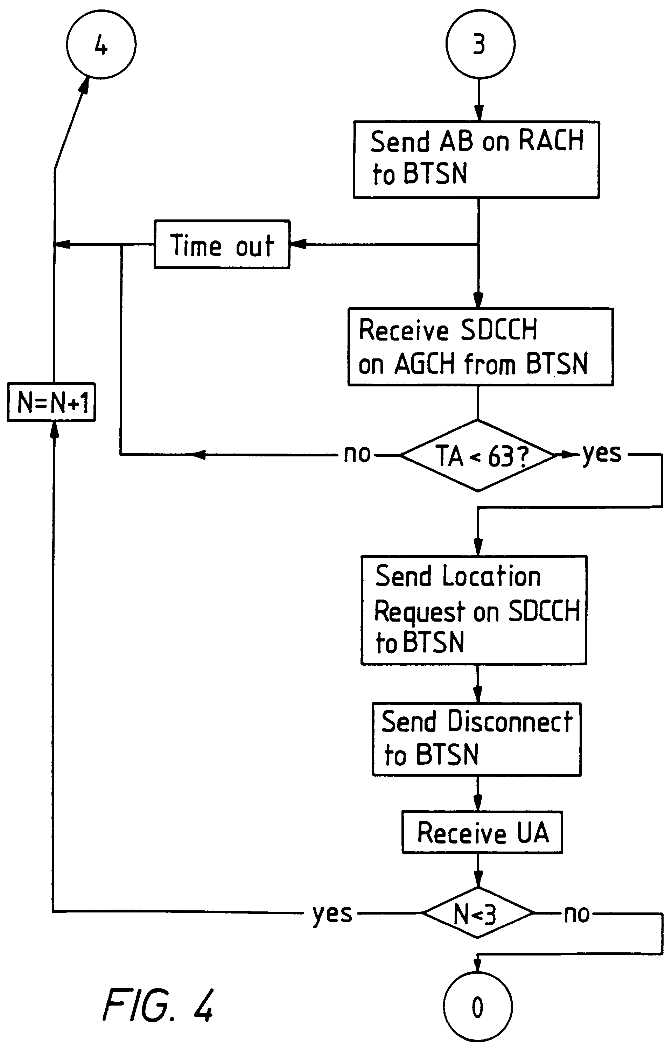

Instead of letting the mobile station receive the timing advance values, it is possible to let it transmit a location request to the base stations in accordance with an alternative embodiment of the present invention. On receiving such a request the base stations instead transmit the timing advance values with the mobile station identities in question to the location unit. Since this method uses the TA values before they are rounded and transmitted to the mobile station (in the previous method the received TA values are rounded to the closest bit period) the accuracy is better than 280 metres. However, this approach requires the creation of a new command in the GSM system, that is the location request. The alternative embodiment differs in the second half of the flow chart in figures 3A, 3B, the flow chart of figure 4 replacing that of figure 3B.

Here, the mobile receives a specially intended control channel, stand-alone dedicated control channel SDCCH, from the base stations and transmits the location request on this channel. Thereafter the base station is disconnected and the mobile unit receives an unnumbered acknowledgement UA as in the previous embodiment.

In figure 5 is shown how the mobile unit establishes a list of the control channels BCCH from all the base stations in the network PLMN. The list is arranged according to the signal strengths of the carriers.

It is possible to improve the accuracy of the methods above by using more than three base stations. Another way is combining the location methods with each other or with some other method, for instance the hyperbola method.

There are many possible applications of the method according to the invention. Examples that may be mentioned are services in emergency situations and traffic routing. In emergency situations the delay between a traffic accident and the arrival of the help can be decreased owing to mobile telephones existing in the vehicles. Already today nearly 100% of all traffic accidents in Sweden are reported by means of mobile telephones. However, the situation may be improved further by automatic location of the mobile telephones in accordance with the present invention.

There are many activities that can benefit from traffic routing using automatic location, for instance courier services, package delivery, forwarding, mobility service and taxi etc. A location service provides a quick selection of the closest vehicle. Of course this means quicker reaction to the customers' desires and a more efficient use of vehicles and drivers. The efficient use of the vehicles also means decreased environmental pollution. The location service makes it possible for the traffic routing to trace the vehicles in real time on a map on a computer screen.

It will not mean any problems for the network operators of the GSM system to charge for the location service. The network operator has control over the short message to the location unit. The message is necessary for the location system to work and the operator could charge a fee for this message. It is also possible to have a subscription fee for the information about the coordinates of the base stations. The network operator can use a part of the control channel BCCH to notify the traffic within a cell where an accident has occured. It is possible to have a subscription fee for this information. Furthermore, the network operator offering a location service has a better competitive position.

## Claims

1. Method of location of a mobile station in a mobile radio system comprising mobile stations and base stations, **characterized** in that each mobile station continuously listens on control channels from surrounding base stations,
at least three base stations are selected by the mobile station,
the mobile station calls the selected base stations,
each of the selected base stations calculates its distance to the mobile station,
the calculated distance information and identity information about the mobile station and the selected base stations are transmitted to a location unit, and
the location of the mobile unit is determined in the location unit.

2. Method according to claim 1, **characterized in** that the mobile station calls the selected base stations with an access signal, the base stations transmits the calculated distances to the mobile unit, and the mobile station transmits the information to the location unit.

3. Method according to claim 1, **characterized** in that the mobile station calls the selected base stations using a location requesting signal, and the base station transmits the information to the location unit.

4. Method according to anyone of the preceding claims, characterized in that the distances between the mobile station and the respective base station are calculated using the timing advance (TA) value measured by the base station.

5. Method according to claim 4, **characterized** in that the location of the mobile station is calculated using the circle method.

6. Method according to anyone of the preceding claims, **characterized** in that the base stations having the strongest signal strengths are selected.

## Patentansprüche

1. Verfahren zur Standortermittlung einer Mobilstation in einem Mobilfunksystem mit Mobilstationen und Basisstationen, dadurch gekennzeichnet, daß jede Mobilstation ständig Steuerkanäle von umgebenden Basisstationen abhört, wenigstens drei Basisstationen von der Mobilstation ausgewählt werden, die Mobilstation die ausgewählten Basisstationen ruft, jede der ausgewählten Basisstationen ihre Entfernung zu der Mobilstation berechnet, die berechnete Abstandsinformation und Identitätsinformation über die Mobilstation und die ausgewählten Basisstationen zu einer Standortermittlungseinheit übertragen werden, und der Standort der Mobileinheit in der Standortermittlungseinheit bestimmt wird.

2. Verfahren nach Anspruch 1, dadurch gekennzeichnet, daß die Mobilstation die ausgewählten Basisstationen mit einem Zugangssignal ruft, daß die Basisstationen die berechneten Abstände zu der Mobileinheit übertragen und die Mobilstation die Information zu der Standortermittlungseinheit überträgt.

3. Verfahren nach Anspruch 1, dadurch gekennzeichnet, daß die Mobilstation die ausgewählten Basisstationen mit einem Standortermittlungsanfragesignal ruft und daß die Basisstation die Information zu der Standortermittlungseinheit überträgt.

4. Verfahren nach einem der vorhergehenden Ansprüche, dadurch gekennzeichnet, daß die Abstände zwischen der Mobilstation und der jeweiligen Basisstation unter Verwendung des von der Basisstation gemessenen "timing advance" (TA)-Wertes berechnet werden.

5. Verfahren nach Anspruch 4, dadurch gekennzeichnet, daß der Standort der Mobilstation unter Verwendung des Kreisverfahrens (circle method) berechnet wird.

6. Verfahren nach einem der vorhergehenden Ansprüche, dadurch gekennzeichnet, daß die Basisstationen mit den stärksten Signalstärken ausgewählt werden.

## Revendications

1. Procédé de localisation d'une station mobile dans un système de radiotéléphonie mobile comprenant des stations mobiles et des stations de base, caractérisé en ce que :
chaque station mobile est continuellement en écoute sur des canaux de commande venant de stations de base voisines,
au moins trois stations de base sont choisies par la station mobile,
la station mobile appelle les stations de base choisies,
chacune des stations de base choisies calcule sa distance à la station mobile,
l'information de distance calculée et l'information d'identité concernant la station mobile et les stations de base choisies sont transmises à une unité de localisation, et
la localisation de la station mobile est déterminée dans l'unité de localisation.

2. Procédé suivant la revendication 1, caractérisé en ce que la station mobile appelle les stations de base choisies avec un signal d'accès, les stations de base transmettent les distances calculées à la station mobile et la station mobile transmet l'information à l'unité de localisation.

3. Procédé suivant la revendication 1, caractérisé en ce que la station mobile appelle les stations de base choisies, au moyen d'un signal de demande de localisation, et la station de base transmet l'information à l'unité de localisation.

4. Procédé suivant une quelconque des revendications précédentes, caractérisé en ce que les distances entre la station mobile et les stations de base respectives sont calculées à l'aide de la valeur d'avance de synchronisation (TA) mesurée par les stations de base.

5. Procédé suivant la revendication 4, caractérisé en ce que la localisation de la station mobile est calculée par la méthode du cercle.

6. Procédé suivant une quelconque des revendications précédentes, caractérisé en ce qu'on choisit les stations de base ayant les plus grandes intensités de signal.
